# EUROPEAN PATENT APPLICATION

(11) **EP 3 111 753 A1**
(43) Date of publication of application: **04.01.2017**
(21) Application number: 14883617.4
(22) Date of filing: 26.09.2014
(51) Int. Cl.: A01G 31/00, A01G 1/00

(54) **HYDROPONIC DEVICE AND HYDROPONIC METHOD USING SAME**

(30) Priority: 28.02.2014 JP 2014037857
(71) Applicant: Panasonic Intellectual Property Management Co., Ltd., Osaka-shi, Osaka 570-6207 (JP)
(72) Inventor: ISHIDOU, Tarou, Osaka 540-6207 (JP)
(74) Representative: Müller-Boré & Partner Patentanwälte PartG mbB
(86) International application number: PCT/JP2014/004928
(87) International publication number: WO 2015/128911

(57) **Abstract**

A hydroponic cultivation apparatus is provided with a partitioning member including a swelling member in which a first through hole is formed and having a first main surface and a second main surface which are directed to opposite sides to each other. The hydroponic cultivation apparatus also has a mounting surface provided at a position opposing to the first main surface in a first space enclosed by a plurality of surfaces including the first main surface. An underground part is arranged in the first space, and a stem part is inserted into the first through hole.

## Description

### TECHNICAL FIELD

The present invention relates to a hydroponic cultivation apparatus and a hydroponic cultivation method using the same.

### BACKGROUND ART

Conventionally, there is a known apparatus for hydroponic culture that can more efficiently grow a plant than soil culture by means of controlling temperature, humidity, and a nutrient solution to be supplied as well as utilizing an effect of an artificial light source. (Patent Literature 1)

Furthermore, there is a known hydroponic cultivation apparatus that can produce a tuber without enlarging its lenticel in order to efficiently grow a root vegetable. (Patent Literature 2)

### CITATION LIST

### PATENT LITERATURE

Patent Literature 1: Japanese Unexamined Patent Application Publication No. 2003-009676
Patent Literature 2: Japanese Unexamined Patent Application Publication No. 10-098961

### SUMMARY OF INVENTION

A hydroponic cultivation apparatus according to the present invention comprises a partitioning member including a swelling member in which a first through hole is formed and having a first main surface and a second main surface which are directed to opposite sides to each other. The hydroponic cultivation apparatus has a first space enclosed by a plurality of surfaces including the first main surface of the partitioning member and has a mounting surface provided at a position opposing to the first main surface.

According to such a configuration as described above, it is possible to suppress dew condensation in the hydroponic cultivation apparatus.

### BRIEF DESCRIPTION OF DRAWINGS

[Fig. 1] Fig. 1 is a sectional view of a hydroponic cultivation apparatus in a first embodiment according to the present invention.
[Fig. 2] Fig. 2 is an enlarged view of a region A of the hydroponic cultivation apparatus shown in Fig. 1.
[Fig. 3] Fig. 3 is a sectional view of a hydroponic cultivation apparatus in a second embodiment according to the present invention.
[Fig. 4] Fig. 4 is an enlarged view of a region B of the hydroponic cultivation apparatus shown in Fig. 3.
[Fig. 5] Fig. 5 is a sectional view of a hydroponic cultivation apparatus in a third embodiment according to the present invention.
[Fig. 6] Fig. 6 is a sectional view of a hydroponic cultivation apparatus in a fourth embodiment according to the present invention.
[Fig. 7] Fig. 7 is a sectional view of a hydroponic cultivation apparatus in a fifth embodiment according to the present invention.
[Fig. 8] Fig. 8 is a sectional view of a hydroponic cultivation apparatus in a sixth embodiment according to the present invention.
[Fig. 9] Fig. 9 is a sectional view of a hydroponic cultivation apparatus in a seventh embodiment according to the present invention.

### DESCRIPTION OF EMBODIMENTS

Prior to explanation of embodiments according to the present invention, a problem caused by a hydroponic cultivation apparatus as a related art will be explain.

According to the apparatus disclosed in the Patent Literature 1, it is impossible to separately and independently control atmospheric temperatures around an aboveground part and an underground part of a plant. In the vicinity of a nutrient solution, dew condensation is generated, and thereby, a fungus occurs. The fungus is a cause of making the plant rotten and weakened.

Further, in the apparatus disclosed in the Patent Literature 2, one space in which an aboveground part of a root vegetable as a plant is arranged and another space in which an underground part thereof and a nutrient solution are arranged are partitioned by a plate made of Styrofoam. The Styrofoam plate has a planting through hole to position a plant, and a stem of a plant enclosed by a polyurethane foam piece is inserted into and fixed to the planting through hole. Therefore, the position of the polyurethane foam piece is moved, as the plant grows. By the movement of the position of the polyurethane foam piece, there arises a clearance between the polyurethane foam piece and the plant or between the polyurethane foam piece and the planting through hole. Heat exchange is performed through the clearance between the one space that is environmentally controlled and in which the aboveground part is arranged and the another space in which the underground part and the nutrient solution are arranged. When the atmospheric temperature at the one space in which the aboveground part is arranged is changed in conjunction with the light period and the dark period, if the atmospheric temperature at the another space in which the underground part and the nutrient solution are arranged is decreased due to the heat exchange, dew condensation is caused. As a result, a fungus occurs.

According to the present invention, it is possible to prevent the occurrence of the fungus by avoiding the dew condensation in the vicinity of the underground part or the planting through hole in the apparatus for performing hydroponics with the aboveground part and the underground part of the root vegetable arranged in the separated spaces respectively.

A hydroponic cultivation apparatus according to one aspect of the present invention will be described referring to drawings. Each of the embodiments described below merely suggests one preferable example. Accordingly, the values, the shapes, the materials, the components, the arrangements and the connecting manners of the components, the processes, the orders of the processes, or the like that will be explained below are merely examples, but do not restrict the present invention.

The respective drawings are schematic diagrams, but are not necessarily depicted precisely. In each of the drawings, substantially the same structures are indicated by the same reference number, and repeated descriptions are omitted or simplified.

### (First Embodiment)

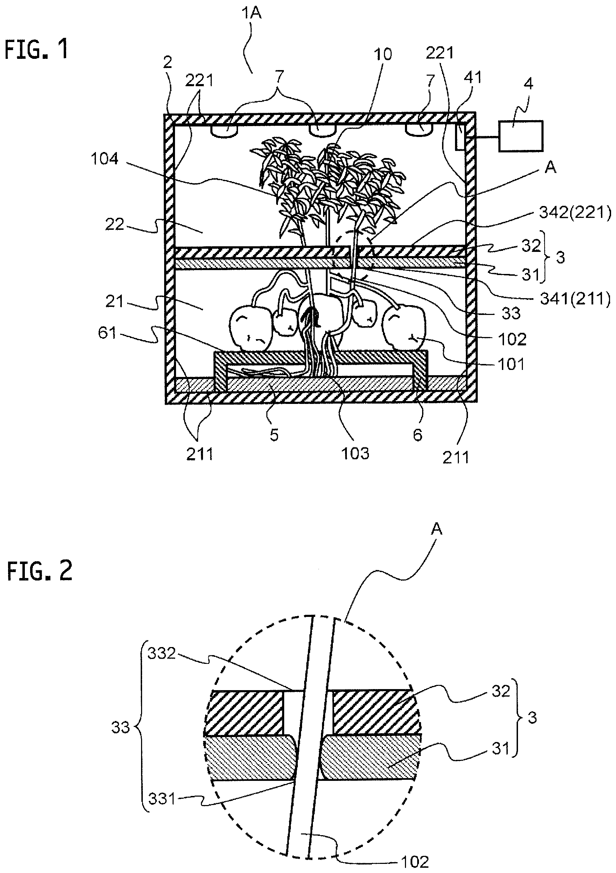

Referring to Fig. 1 and Fig. 2, a hydroponic cultivation apparatus 1A in the first embodiment according to the present invention will be described below.

Fig. 1 is a sectional view of the hydroponic cultivation apparatus 1A. Fig. 2 is an enlarged view of a region A in Fig. 1. In the hydroponic cultivation apparatus 1A, it is possible to grow a planted seeding 10 of a root vegetable such as a potato.

The hydroponic cultivation apparatus 1A has a partitioning member 3. In Fig. 1, a first space 21 is below the partitioning member 3, and a second space 22 is above the partitioning member 3.

The partitioning member 3 includes a swelling member 31 in which a through hole 33 (a first through hole 331) is formed, the swelling member 31 having a first main surface 341 and second main surface 342 that are directed to opposite sides to each other. The hydroponic cultivation apparatus 1A has a mounting surface 61 at a position opposing to the first main surface 341 in the first space 21 enclosed by a plurality of surfaces 211 including the first main surface 341 of the partitioning member 3. The first through hole 331 formed in the swelling member 31 can be shrunken by means of absorption of water vapor or water into the swelling member 31.

In the hydroponic cultivation apparatus 1A, the partitioning member 3 can be formed by piling up the swelling member 31 and a heat insulating member 32. The through hole 33 of the partitioning member 3 is formed so as to communicate the first through hole 331 formed in the swelling member 31 with the second through hole 332 formed in the heat insulating member 32. The swelling member 31 is in contact with the first space 21.

The swelling member 31 has moisture absorbency or water absorbency, and therefore, swells by means of absorption of water vapor or water. In other words, the swelling member 31 has a swelling property as well. The swelling member 31 also has flexibility and elasticity, and can increase the flexibility and the elasticity by means of absorption of water vapor or water. As the swelling member 31, it is possible to use acrylic resin, which is ultra-water-absorbing resin, or polyethylene glycol, for example.

Heat insulating member 32 has a heat insulating property. As the heat insulating member 32, it is possible to use a glass wool member, a wooden fiber board, a foamed styrene member , and a rigid polyurethane foam member, for example. Especially, a group of natural fibers such as a wooden fiber board is preferable, since the same is relatively excellent in a moisture absorbing and releasing property and unlikely to cause dew condensation.

The partitioning member 3 has a plate-like shape. As for the partitioning member 3, it is possible to increase a mechanical strength by piling up the swelling member 31 and the heat insulating member 32. With this configuration, it is possible to provide the partitioning member 3 with such a degree of strength that its dead load can be supported.

The partitioning member 3 is arranged so that the swelling member 31 faces the first space 21. The swelling member 31 is exposed to the first space 21 in which a nutrient solution 5 has been injected. Therefore, it is possible to efficiently absorb water vapor evaporated from the nutrient solution 5.

The hydroponic cultivation apparatus 1A can be configured so as to spatially separate the inside of a cultivation tank 2 by the partitioning member 3. In the cultivation tank 2, one space enclosed by the plurality of surfaces 211 including the first main surface 341 of the partitioning member 3 is referred to as the first space 21, and another space enclosed by a plurality of surfaces 221 including the second main surface 342 is referred to as a second space 22. As the plurality of surfaces 211 forming the first space 21 and the plurality of surfaces 221 forming the second space 22, the inner surfaces of the cultivation tank 2 can be used.

The planted seeding 10 of a root vegetable or the like, generally speaking, has the aboveground part with a leaf part 104, the underground part in which a tuber 101 of a potato or the like is formed, as well as a stem part 102 connecting the aboveground part and the underground part. In the first space 21, the nutrient solution 5 and the underground part of the planted seeding 10 are arranged, and the in the second space 22, the aboveground part is arranged. The stem part 102 of the plated seeding 10 is inserted into the through hole 33 of the partitioning member 3. By inserting the stem part 102 of the planed seeding 10 into the through hole 33 of the partitioning member 3, the planted seeding 10 is gripped with the partitioning member 3, and thereby, the aboveground part is arranged in the second space 22, and the underground part is arranged in the first space 21.

It is preferable that the hole diameter of the first thorough hole 331 is such a degree that there is a clearance between the stem part 102 and the hole wall of the first through hole 331, when the stem part 102 is inserted into the first through hole 331 in a state where the swelling member 31 has not absorbed water vapor or water. It is preferable that the first through hole 331 has a size to be shrunken to such a degree as to come into contact with the stem part 102 due to the absorption of water vapor or water by the swelling member 31. The hole diameter of the thorough hole 331 is equal to or more than 10 mm and equal to or less than 20 mm, in the case where the swelling member 31 has not absorbed water vapor or water. Note that the swelling member 31 has flexibility and elasticity as well. Therefore, the hole diameter of the first though hole 331 has once become larger when the planted seeding 10 has been inserted into the first through hole 331, and thereafter, can return to the original hole diameter.

It is preferable that the hole diameter of the second through hole 332 has such a size that the step part 102 can be inserted into the second through hole 332 without contact. It is preferable that even if the hole wall of the first through hole 331 that has swollen is in contact with the step part 102, the hole wall of the second through hole 332 is not in contact with the stem part 102. The hole diameter of the through hole 332 is equal to or more than 20 mm and equal to or less than 50 mm, for example.

In a state where the swelling member 31 has not absorbed water vapor or water, it is preferable that the hole diameter of the second thorough hole 332 is larger than that of the first through hole 331. This is because it is easy to conduct an operation to arrange the planted seeding 10 in the through hole 33.

Note that the state where the swelling member 31 has not absorbed water vapor or water is, for example, a state (the initial state) where the hydroponic cultivation apparatus 1 A is shipped from a factory or a state where the swelling member 31 has been dried.

It is preferable that the first though hole 331 and the second though hole 332 have circular shapes respectively, although not limited thereto. The first though hole 331 and the second though hole 332 may have a polygonal shape or a star-like shape, for example.

In Fig. 1, a mounting pedestal 6 is below the through hole 33, and has a mounting surface 61 on which the tuber 101 that is growing can be placed. The nutrient solution 5 is injected into the first space 21 and around the mounting pedestal 6 so that its liquid surface is lower than the mounting surface 61. According to this, a root part 103 can come into contact with and absorb the nutrient solution 5. Moreover, it is possible to avoid the tuber 101 from being in contact with the nutrient solution 5, and thereby, suppress its lenticel from being enlarged and prevent its rottenness. Note that it is preferable that the mounting surface 61 has openings through which the root part 103 can pass while the tuber 101 cannot pass. This is because it is possible to prevent the tuber 101 from being in contact with the nutrient solution 5, while it is possible to make the root part 103 pass through the mounting surface 61 and bring the root part 103 into contact with the nutrient solution 5 below the mounting surface 61.

In Fig. 1, the mounting pedestal 6 is arranged so as to protrude upward from the lower portion of the first space 21, that is, the bottom portion of the cultivation tank 2, but is not limited to the same. For example, the mounting pedestal 6 having openings on the mounting surface 61 may be arranged over the whole surface of the lower portion of the first space, that is, the whole surface of the bottom portion of the cultivation tank 2.

It is preferable that the second space 22 provides the light period and the dark period. It is preferable that the hydroponic cultivation apparatus 1A has a temperature controlling portion 4 for controlling a temperature of the second space 22. It is preferable that the temperature controlling portion 4 has heating and cooling functions such as a heat exchanging portion 41.

The light period and the dark period can be realized by light from the sun, for example. The light period and the dark period can also be produced artificially by providing a light source 7 such as LED. In other words, a light period and a dark period respectively corresponding to a day and a night that occurs by the periodical movement of the sun can be imitated by the light source 7.

It is preferable to make a temperature control so that a temperature of the second space 22 in the light period is higher than that in the dark period at the time when a tuber of the planted seeding 10 as a root vegetable is formed. For example, it is preferable that the temperature controlling portion 4 can set a temperature of the second space 22 to range from 17 to 23 degrees centigrade in the light period, and can set a temperature of the second space 22 to range from 7 to 13 degrees centigrade in the dark period. It is preferable to set a temperature in the light period to be higher in a range from 7 to 13 degrees centigrade than that in the dark period in the second space 22. By setting the temperature to be in the above-described range, it is possible to increase a yield of a root vegetable such as a potato.

In the hydroponic cultivation apparatus 1A, the swelling member 31 including the first through hole 331 has (moisture absorbency or water absorbency) and a swelling property, and therefore, can swell by absorbing water vapor evaporated from the nutrient solution 5 existing in the first space 21. By this swelling, the first through hole 331 is shrunken. Since the swelling member 31 has flexibility as well, the hole diameter of the first through hole 331 can follow a change in a size of the stem part 102 arising from the growth of the planted seeding 10. In other words, it is possible to always maintain a state where the hole wall of the first through hole 331 tightly adheres to the stem part 102. By the adherence, it is possible to prevent a clearance from occurring between the first through hole 331 and the stem part 102. With this configuration, the partitioning member 3 can separate the second space 22 in which the aboveground part of the planted seeding 10 is arranged and the first space 21 in which the underground part of the planted seeding 10 is arranged. In other words, it is possible to suppress a movement of atmosphere between the first space 21 and the second space 22. A movement of water vapor and heat that arises due to the movement of atmosphere is also suppressed.

Further, the swelling member 31 can suppress dew condensation in the first space 21 by absorbing water vapor evaporated from the nutrient solution 5. The heat insulating member 32 can suppress heat from being exchanged between the first space 21 and second space 22. Thereby, even if a temperature of the second space 22 is changed by the temperature controlling portion 4 in conjunction with the light period and the dark period, a temperature of the first space 21 is not affected by the same. In the dark period, especially, even if a temperature of the second space 22 is decreased, it is possible to suppress the decrease of a temperature in the first space 21. As a result, dew condensation is avoided in the first space 21. As described above, it is possible to prevent the generation of fungus by preventing dew condensation in the first space 21.

Moreover, in the partitioning member 3, it is possible to suppress the generation of fungus by preventing dew condensation of the stem part 102 on the through hole 33 and in the vicinity thereof, since the swelling member 31 has moisture absorbency and water absorbency.

### (Second Embodiment)

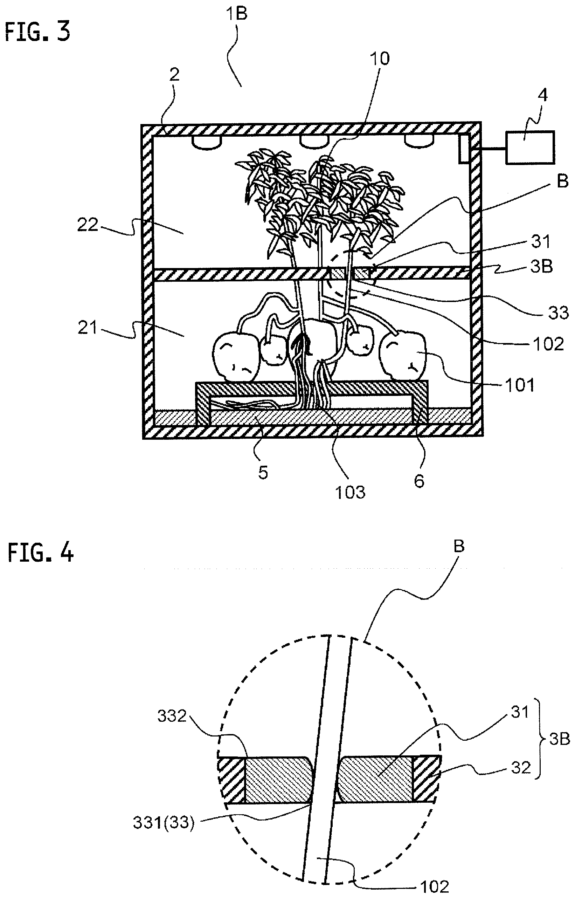

A hydroponic cultivation apparatus 1B according to the second embodiment will be described below referring to Figs. 3 and 4.

Fig. 3 is a sectional view of the hydroponic cultivation apparatus 1B. Fig. 4 is an enlarged view of an area B in Fig. 3. The partitioning member 3 of the hydroponic cultivation apparatus 1A in the first embodiment has a multilayered structure in which the swelling member 31 and the heat insulating member 32 are piled up. By contrast, the partitioning member 3B of the hydroponic cultivation apparatus 1B has a single-layer structure. The configuration other than this is the same as that of the first embodiment.

The partitioning member 3B has a plate like shape, and can be configured by a swelling member 31 in which the first through hole 331 is formed and a heat insulating member 32 surrounding the swelling member 31. In other words, in the partitioning member 3B, the second through hole 332 is formed in the heat insulating member 32, and the swelling member 31 is arranged in the second thorough hole 332. It is preferable that the hole diameter of the first through hole is equal to or more than 10 mm and equal to or less than 20 mm during drying. It is preferable that the hole diameter of the second through hole is equal to or more than 20 mm and equal to or less than 50 mm. It is possible to reduce an amount of the swelling member 31 to be used.

The partitioning member 3B can be formed by filling with the swelling member 31 the through hole 332 of the heat insulating member 32 having a plate like shape. Further, the partitioning member 3B can be formed by surrounding with the insulating member 32 the swelling member 31 in which the first through hole is formed so as to be integrated.

The following method can also be used as a method for arranging the planted seeding 10 in the hydroponic cultivation apparatus 1B. For example, it is possible to use a method of inserting the stem part 102 surrounded by the swelling member 31 into the second through hole 332 formed in the partitioning member 3B. Further, a clearance between the second through hole 332 and the stem part 102 may be filled with the swelling member 31, after the stem part 102 of the planted seeding 10 is inserted into the second through hole 332. It becomes easy to conduct an operation to arrange the planted seeding 10, because the second through hole 332 is larger than the first through hole 331.

### (Third Embodiment)

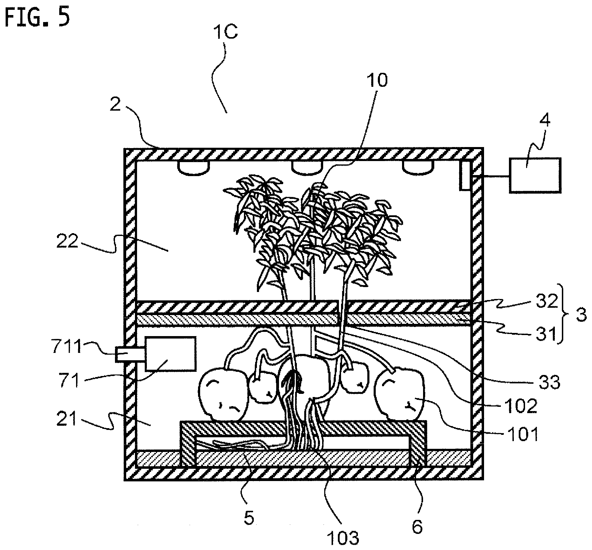

A hydroponic cultivation apparatus 1 C according to the third embodiment will be described below referring to Fig. 5. Fig.5 is a sectional view of the hydroponic cultivation apparatus 1C. The hydroponic cultivation apparatus 1C has a first dehumidifying portion 71 in the first space 21. The configuration other than this is the same as that of the first embodiment.

It is possible to decrease humidity in the first space 21 by the first dehumidifying portion 71. As a result, it is possible to further improve the effect of preventing the generation of a fungus by avoiding dew condensation in the first space 21. The hydroponic cultivation apparatus 1C may have a communicating portion 711 configured to make the first dehumidifying portion 71 communicate with the outside of the first space 21. It is possible to discharge water gathered by the first dehumidifying portion 71 into the outside of the first space 21. Note that the water gathered by the first dehumidifying portion 71 can be utilized again by returning the same to the nutrient solution 5.

Note that the first dehumidifying portion 71 can maintain appropriate humidity in the first space 21 by monitoring the humidity in the first space 21.

### (Fourth Embodiment)

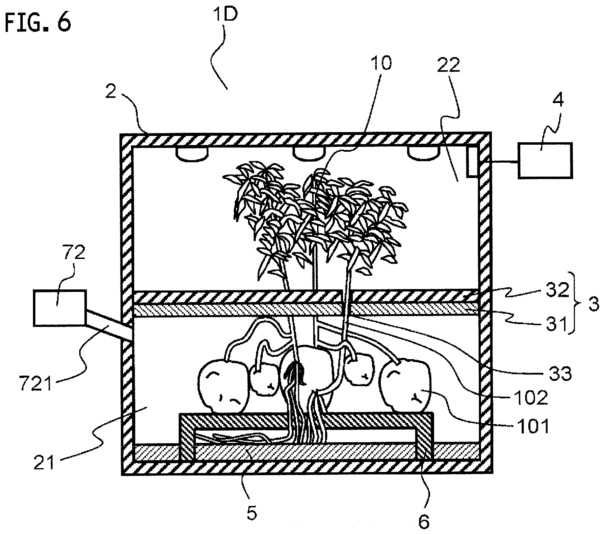

A hydroponic cultivation apparatus 1D according to the fourth embodiment will be described below referring to Fig. 6. Fig. 6 is a sectional view of the hydroponic cultivation apparatus 1D.

The hydroponic cultivation apparatus 1D has the second dehumidifying portion 72 outside the first space 21. The second dehumidifying portion 72 communicates with the first space 21 through a communication portion 721. The configuration other than this is the same as that in the first embodiment.

It is possible to decrease humidity in the first space 21 by the second dehumidifying portion 72. As a result, it is possible to further improve the effect of preventing the generation of a fungus by avoiding dew condensation in the first space 21. Further, the second dehumidifying portion 72 is provided outside the first space 21. Therefore, it is possible to make the first space 21 smaller.

Note that the second dehumidifying portion 72 can maintain appropriate humidity in the first space 21 by monitoring the humidity in the first space 21.

### (Fifth Embodiment)

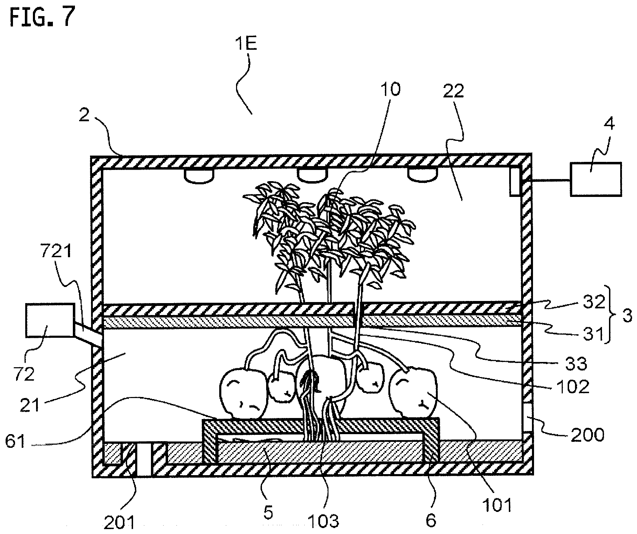

A hydroponic cultivation apparatus 1E according to the fifth embodiment will be described below referring to Fig. 7. Fig. 7 is a sectional view of the hydroponic cultivation apparatus 1E.

The hydroponic cultivation apparatus 1E has an injection port 200 and a discharge port 201 for a nutrient solution. The configuration other than this is the same as that in the first embodiment.

The injection port 200 is provided on a side surface of the first space 21 in the cultivation tank 2, and the nutrient solution 5 can be injected into the first space 21 through the injection port 200. The discharge port 201 is provided on the bottom portion near another side surface of the first space 21, and the nutrient solution 5 can be discharged through the discharge port 201. The injection port 200 can be arranged on one of the plurality of surfaces 211 forming the first space 21, and the discharge port 201 can be arranged on another of the plurality of surfaces 211 forming the first space 21. For example, by providing the discharge port 201 on the bottom portion in the first space 21 near one side surface opposite to another side surface on which the injection port 200 is provided, it is possible to flow the nutrient solution 5 between the injection port 200 and the discharge port 201. As a result, it is possible to always supply the root part 103 with the nutrient solution 5, a temperature and an ingredient of which have been adjusted.

Moreover, it is possible to control the height of a liquid surface of the nutrient 5 by adjusting the height of the discharge port 201. Thereby, it is possible to maintain the height of a liquid surface of the nutrient solution 5 so as to always be lower than that of the mounting surface 61. As a result, since it is prevented that the tuber 101 is immersed into the nutrient solution 5, it is possible to avoid the enlargement of its lenticel and its rottenness.

The nutrient solution 5 discharged from the discharge port 201 may be disposed as it is, and for example, may be injected again from the injection port 200 by circulating the same using a circulating pump.

### (Sixth Embodiment)

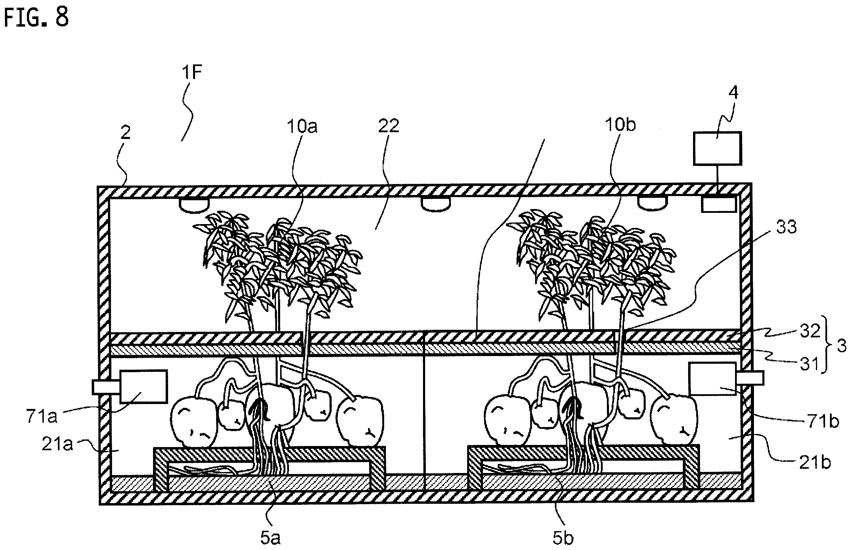

A hydroponic cultivation apparatus 1F according to the sixth embodiment will be described below referring to Fig. 8. Fig. 8 is a sectional view of the hydroponic cultivation apparatus 1F.

The hydroponic cultivation apparatus 1F has a second space 22 that is shared and first spaces 21 a and 21b that are independent of each other. A first dehumidifying portion 71 a is provided in the first space 21 a, and a first dehumidifying portion 71b is provided in the first space 21b. The configuration other than this is the same as that in the first embodiment.

The hydroponic cultivation apparatus 1F independently dehumidifies the first spaces 21a and 21b that are independent of each other, and thereby, can control humidity of each of the first spaces 21a and 21b that are independent of each other. With this configuration, for example, it is possible to control humidity environment to the most appropriate ones for different planted seedings 10a and 10b in the first spaces 21 a and 21b, respectively. Further, it is possible to use different kinds (for example, different concentrations) of nutrient solutions 5a and 5b in the first spaces 21a and 21b, respectively. Therefore, it is possible to supply the planted seedings 10a and 10b with the most appropriate nutrient solutions 5a and 5b, respectively. The hydroponic cultivation apparatus 1F can grow different kinds of root vegetables at the same time and by one apparatus.

Note that in the hydroponic cultivation apparatus 1F, instead of the first dehumidifying portions 71a and 71b provided in the first spaces 21a and 21b, respectively, such second dehumidifying portions (not shown) as shown in Fig. 6 may be provided outside the first space 21.

### (Seventh Embodiment)

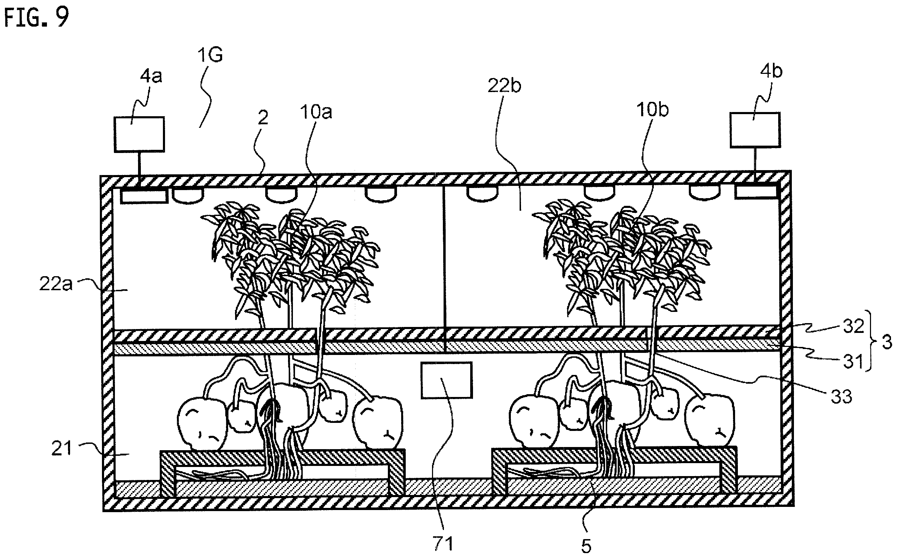

A hydroponic cultivation apparatus 1G according to the seventh embodiment will be described below referring to Fig. 9. Fig. 9 is a sectional view of the hydroponic cultivation apparatus 1G.

The hydroponic cultivation apparatus 1G has second spaces 22a and 22b that are independent of each other and a first space 21 that is shared. A temperature controlling portion 4a is provided in the second space 22a, and a temperature controlling portion 4b is provided in the second space 22b. The configuration other than this is the same as that in the first embodiment.

The hydroponic cultivation apparatus 1G can independently control temperatures in the second spaces 22a and 22b that are independent of each other. For example, temperature environments are controlled to the most appropriate ones for planted seedings 10a and 10b in the second spaces 22a and 22b, respectively. Therefore, the hydroponic cultivation apparatus 1G can grow different kinds of root vegetables at the same time and by one apparatus.

Each of the cultivation tanks 2 of the hydroponic cultivation apparatuses 1A to 1 G may have such a size that a human being can work therein. For example, the cultivation tanks 2 may be a greenhouse for growing a plant or a growing room of a plant growing factory.

Each of the sectional shapes of the hydroponic cultivation apparatuses 1A to 1G is a rectangular shape, respectively, but not limited to the same, and may substantially be an approximately circular or polygonal shape. It is preferable that the first space 21 can be shielded from light. For example, it is preferable to use a light shield material in portions to form the first space 21 of the cultivation tank 2. For example, a sheet having a light shielding property may be attached to the inside surface or the outside surface of the cultivation tank 2.

In the respective embodiments, it is shown that a planted seeding of a potato as an example of a root vegetable is grown. The planted seeding of a root vegetable is not limited to that of a potato, but may be that of another kind of root vegetable.

### REFERENCE SIGNS LIST

- 1A, 1B, 1C, 1D, 1E, 1F, 1G: hydroponic cultivation apparatus
- 2: cultivation tank
- 21, 21 a, 21b: first space
- 22, 22a, 22b: second space
- 3, 3B: partitioning member
- 31: swelling member
- 32: heat insulating member
- 33: through hole
- 331: first through hole
- 332: second through hole
- 341: first main surface
- 342: second main surface
- 4, 4a, 4b: temperature controlling portion
- 5, 5a, 5b: nutrient solution
- 6: mounting pedestal
- 71, 71a, 71b: first dehumidifying portion
- 72: second dehumidifying portion
- 711, 721: communicating portion
- 10, 10a, 10b: planted seeding (root vegetable)
- 101: tuber
- 102: stem part
- 103: root part
- 104: leave part

## Claims

1. A hydroponic cultivation apparatus comprising:
a partitioning member that includes a swelling member in which a first through hole is formed and has a first main surface and a second main surface which are directed to opposite sides to each other; and
a mounting surface that are provided at a position opposing to the first main surface in a first space enclosed by a plurality of surfaces including the first main surface.

2. The hydroponic cultivation apparatus according to claim 1, wherein the first through hole can be shrunk due to absorption of water vapor or water into the swelling member.

3. The hydroponic cultivation apparatus according to claim 1 or 2, wherein
the partitioning member is formed by piling up the swelling member and a heat insulating member in which a second through hole communicating with the first through hole is formed, and
the swelling member is in contact with the first space.

4. The hydroponic cultivation apparatus according to claim 1 or 2, wherein
the partitioning member is formed with the swelling member and a heat insulating member in which a second through hole including the swelling member therein is formed.

5. The hydroponic cultivation apparatus according to any one of claims 1 to 4, further comprising:
a cultivation tank that is partitioned into the first space and a second space which is enclosed by a plurality of surfaces including the second main surface of the partitioning member, the second space capable of providing a light period and a dark period; and
a temperature controlling portion that controls a temperature of the second space.

6. The hydroponic cultivation apparatus according to claim 5, wherein
the temperature controlling portion can set a temperature of the second space in the light period to be in a range from 17 to 23 degrees centigrade and can set a temperature of the second space in the dark period to be in a range from 7 to 13 degrees centigrade.

7. The hydroponic cultivation apparatus according to claim 5, wherein
the temperature controlling portion can set a temperature of the second space in the light period to be higher in a range from 7 to 13 degrees centigrade than that in the dark period.

8. The hydroponic cultivation apparatus according to any one of claims 5 to 7, further comprising a light source that is provided in the second space and capable of providing the light period.

9. The hydroponic cultivation apparatus according to any one of claims 1 to 8, further comprising:
an injection port that is provided on one of the plurality of surfaces forming the first space and can inject a nutrient solution into the first space; and
a discharge port that is provided on another of the plurality of surfaces forming the first space and can discharge the nutrient solution from the first space.

10. The hydroponic cultivation apparatus according to any one of claims 1 to 9, further comprising a first dehumidifying portion provided inside the first space.

11. The hydroponic cultivation apparatus according to any one of claims 1 to 9, further comprising:
a second dehumidifying portion provided outside the first space; and
a communicating portion that makes the second dehumidifying portion communicate with the first space.

12. A hydroponic cultivation method for cultivating a root vegetable having an aboveground part, an underground part, and a stem part by which the aboveground part and the underground part are connected to each other, using the hydroponic cultivation apparatus according to claim 1, comprising
arranging a nutrient solution and the underground part in the first space and inserting the stem part into the first through hole formed in the swelling member; and
reducing a hole diameter of the first through hole to such a size that the first through hole and the stem part are in contact with each other.

13. The hydroponic cultivation method according to claim 12, comprising
shrinking the first through hole by making water vapor or water absorbed into the swelling member.

14. The hydroponic cultivation method according to claim 12 or 13, wherein
the aboveground part is arranged in the second space that is enclosed by a plurality of surfaces including the second main surface and capable of providing a light period and a dark period, wherein the hydroponic cultivation method comprising
making a temperature in the light period higher than that in the dark period in the second space during a time period for forming a root and a stem of the root vegetable.

15. The hydroponic cultivation method according to claim 14, comprising
controlling a temperature of the second space in the light period to be in a range from 17 to 23 degrees centigrade and controlling a temperature of the second space in the dark period to be in a range from 7 to 13 degrees centigrade.

16. The hydroponic cultivation method according to claim 14, comprising
controlling a temperature of the second space in the light period to be higher in a range from 7 to 13 degrees centigrade than that in the dark period.
